# EUROPÄISCHE PATENTANMELDUNG

(11) **EP 1 036 593 A1**
(43) Veröffentlichungstag der Anmeldung: **20.09.2000**
(21) Anmeldenummer: 00104534.3
(22) Anmeldetag: 13.03.2000
(51) Int. Cl.: B01J 35/00, B01J 23/745, B01J 21/06, C02F 1/32, C02F 1/72

(54) **Mit Fe3+-Ionen dotierter Titandioxid-Photokatalysator**

(30) Priorität: 16.03.1999 DE 19911738
(71) Anmelder: Fraunhofer-Gesellschaft zur Förderung der angewandten Forschung e.V., 80636 München (DE)
(72) Erfinder: Hopp, Werner, 97225 Retzbach (DE); Raether, Friedrich Dr., 97204 Höchberg (DE); Müller, Gerd, 97084 Würzburg (DE); Niemann, Silvia, 52072 Aachen (DE); Puckler, Dietmar, 44263 Dortmund (DE); Meisterjahn, Peter, 58644 Iserlohn (DE)
(74) Vertreter: Olgemöller, Luitgard, Dr.

(57) **Zusammenfassung**

Die Erfindung betrifft mit Fe³⁺-Ionen dotierte Titandioxid-Photokatalysatoren, die durch einen dem der Fe³⁺-Ionen äquimolaren oder annähernd äquimolaren Gehalt an fünfwertigen Ionen wie Niob-, Vanadium- oder Phosphorionen gekennzeichnet sind. Die Herstellung der Katalysatoren kann über ein Sol-Gel-Verfahren, aber auch durch das Sintern entsprechender Oxidmischungen erfolgen. Bevorzugt wird der erfindungsgemäße Photokatalysator als Schicht auf einem Substrat eingesetzt, die durch Auftragen auf das Substrat und anschließendes Trocknen und Sintern eines entsprechenen Sols oder Gels auf dieses Substrat, aber auch durch Auftragen einer Paste aus dem pulverförmigen Katalysator und einem Bindemittel auf das genannte Substrat erzeugt werden kann. Der Katalysator eignet sich zum Reinigen von (Ab-)Wässern.

## Beschreibung

Es ist seit längerem bekannt, daß Titandioxid photokatalytisch organische Verbindungen zersetzen kann. Ursache hierfür sind die Halbleitereigenschaften dieser Substanz, durch die bei Bestrahlung im Leitungsband Elektronen freisetzt werden und im Valenzband positive Löcher entstehen, die eine starke oxidierende und reduzierende Wirkung besitzen. Daher ist Titandioxid für die Oxidation von organischen Schadstoffen in der Luft oder im Wasser einsetzbar. Insbesondere kommt der Abbau von solchen organischen Schadstoffen in Wasser in Betracht, die durch andere Methoden (z.B. biologische Methoden) nur schwer oder überhaupt nicht abbaubar sind. Hierzu zählen verschiedene chlorierte organische Verbindungen. Als Beispiele für Wasser seien hier Abwasser, insbesondere aus der Industrie, das mit speziellen organischen Schadstoffen verunreinigt ist, Grundwasser und Sickerwasser genannt.

Der photokatalytische Abbau von Abwässern wurde ursprünglich dadurch bewirkt, daß die zu behandelnden Abwässer mit dem Titandioxid in Pulverform in Kontakt gebracht wurden. Derartige Verfahren sind beispielsweise in den europäischen Anmeldungen mit den Veröffentlichungsnummern 401884 A und 417847 A beschrieben.

Ein Nachteil dieser Verfahren (der sog. Suspensionsmethode) ist die Notwendigkeit der Trennung des Photokatalysators vom gereinigten Wasser. Um den Trennungsschritt zu vermeiden, wurde daher auch vorgeschlagen, daß die Titandioxid-Partikel auf einem Träger fixiert werden (z.B. gemäß DE 4437767 A1), zu Membranen verarbeitet werden (z.B. gemäß WO 96/04069) oder über das Sol-Gel-Verfahren homogen in Schichtform auf einem Substrat aufgebracht werden (EP 770579).

Reines Titandioxid, insbesondere in der bevorzugten Anatas-Struktur, hat einen hohen photokatalytischen Wirkungsgrad. Allerdings absorbiert es Licht unterhalb von 400 nm, also im UV-Bereich. Mit sichtbarem Licht ist es nicht anregbar.

Man hat daher nach Möglichkeiten gesucht, um das Absorptionsspektrum zu verschieben. Dies gelingt durch die Dotierung des Titandioxids mit Eisenionen, insbesondere mit Eisen(III)-Ionen, und kann beispielsweise durch Umsetzen von feinen Titandioxid-Teilchen (z.B. Degussa P-25) mit in Aceton gelöstem Eisen-acetylacetonat (Fe(acac)₃) bewirkt werden (siehe José Navío et al., Journal of Molecular Catalysis A: Chemical 106 (1996) 267-276). P. Sawunyama et al., Materials Research Bulletin, Vol. 33 Nr. 5, pp. 795-801 (1998) beschreiben die Natur mehrschichtiger photokatalytischer Schichten auf TiO₂-Basis, die mittels einem Sol-Gel-Verfahren hergestellt worden waren. Auch mit Eisen(III) dotierte Schichten wurden untersucht, jedoch für weniger wirksam befunden. Es wird spekuliert, daß die Eisen³⁺-Ionen, von denen man annimmt, daß sie Gitterplätze des Titans einnehmen, als Ladungsträger-Rekombinationsstellen fungieren. Navío et al., a.a.O., schreiben dies weiterhin einer Photokorrosion zu, da in den Proben ausgelaugte Eisenionen gefunden wurden.

Aufgabe der vorliegenden Erfindung ist es, einen Photokatalysator auf Titandioxid-Basis bereitzustellen, der durch Licht im sichtbaren Bereich anregbar ist, aber keine oder eine verringerte Photokorrosion zeigt.

Diese Aufgabe wird gelöst durch die Bereitstellung eines Titandioxid-Photokalatysators, der mit Fe³⁺-Ionen dotiert ist und einen annähernd äquimolaren Gehalt an fünfwertigen Ionen, bezogen auf die Eisen-Ionen, aufweist.

Überraschenderweise konnte gefunden werden, daß die Gitterstörung, die durch den Einbau der Eisen-Ionen in das Kristallgitter des Titandioxids hervorgerufen wird, eine Ursache für die Auslaugung von Eisen-Ionen ist. Durch den äquimolaren oder annähernd äquimolaren Einbau von fünfwertigen Ionen wird das Ladungsdefizit ausgeglichen und die Ursache für die Photokorrosion beseitigt.

Der erfindungsgemäße Photokatalysator enthält als Grundbestandteil Titandioxid. Dabei kann das Titandioxid entweder homogen durchgehend mit Eisen-Ionen dotiert sein; es bietet sich aber auch die Möglichkeit an, daß Eisen-Ionen nur auf der Oberfläche oder in oberflächennahen Bereichen vorhanden sind. Da die katalytische Wirkung über Oberflächenstrukturen erfolgt, ist letztere Variante ausreichend.

Es sollte klar sein, daß der Ausdruck "dotiert" vorliegend ganz allgemein den Zusatz von Eisen-Ionen bezeichnen soll, unabhängig davon, ob diese nur an der Oberfläche oder in oberflächennahen Bereichen oder aber auch verteilt über das gesamte Material des Photokatalysators vorhanden sind.

Der Gehalt an Fe³⁺-Ionen ist in einem relativ breiten Bereich variierbar. Der Fachmann wird ihn unter Gesichtspunkten wie Partikelgröße, Homogenität des Materials oder dergleichen auswählen. Wird nur die Oberfläche der Titandioxid-Partikel mit Eisen dotiert, so wird allgemein eine geringere Menge an Eisen benötigt werden als für ein Material, in dem das Eisen homogen in der Kristallstruktur verteilt ist. Ganz allgemein sind Eisenmengen von 0,1 - 15 Mol-%, bezogen auf Titan, empfehlenswert, wobei insbesondere Bereiche von etwa 2 - 5 Mol-% Eisen zu bevorzugen sind.

Aufgrund des oben genannten Effektes des Ladungsausgleichs ist es empfehlenswert, die erfindungsgemäß zuzusetzenden fünfwertigen Ionen in der Molmenge einzusetzen, die der des Eisens entspricht.

Dadurch wird ein optimaler Ladungsausgleich erzielt. Selbstverständlich ist es aber auch möglich, die fünfwertigen Ionen in einer nicht genau äquimolaren Menge einzusetzen. So sind Abweichungen von 5 bis 10 % (bezogen auf die Menge des Eisens bzw. der fünfwertigen Ionen), ggf. auch bis etwa 30 % ohne weiteres hinnehmbar. Falls homogen mit Eisen dotierte Titandioxidpartikel oder -schichten nur an der Oberfläche mit den fünfwertigen Ionen dotiert werden sollen, können die Abweichungen sogar noch größer sein, denn wesentlich ist, daß der Ladungsausgleich auf der Oberfläche bzw. in oberflächennahen Bereichen erfolgen kann.

Bei der Wahl der fünfwertigen Ionen ist der Fachmann im wesentlichen frei. Natürlich ist es empfehlenswert, solche Ionen auszuwählen, die Gitterplätze des Titans einnehmen können, ohne die Kristallstruktur des Titandioxids (Anatas oder Rutil) allzusehr zu verzerren. Bevorzugt eignen sich Niob, Vanadium oder Phosphor, jeweils in der formalen Oxidationsstufe +5. Weitere geeignete Ionen lassen sich anhand der vorgenannten Überlegungen durch den Fachmann leicht auffinden.

Das Tiandioxid liegt bevorzugt in der Anatas-Kristallstruktur vor.

Der Titandioxid-Photokatalysator kann in seiner chemischen Zusammensetzung ausschließlich aus den bisher erwähnten Elementen bestehen, also die formale Zusammensetzung TiO₂-Fe₂O₃-M⁵⁺₂O₅ besitzen. Er kann aber selbstverständlich weitere Zusätze enthalten, beispielsweise solche, die als Stand der Technik genannt sind, wie organische Farbstoffe als Sensitizer, Siliciumdioxid und/oder Zinkoxid und/oder Wolframoxid, Edelmetalle wie Platin, Rhodium, Ruthenium, Paladium oder Silber oder andere Metalle, beispielsweise Kupfer, Zink, Mangan oder Eisen, in Partikelform oder als Schicht, aber auch beispielsweise Cerdioxid. Es wurde auch bereits vorgeschlagen, dem Photokatalysator Eisen in Form von Eisentitanat zuzusetzen.

Der erfindungsgemäße Photokatalysator kann eine beliebige, dem jeweiligen Verwendungszweck angemessene Gestalt aufweisen. Beispielsweise kann er als Pulver oder als Schicht vorliegen.

Sowohl für die Herstellung von Pulvern als auch für eine solche von Schichten bieten sich zwei prinzipiell unterschiedliche Herstellungsverfahren an, nämlich einmal dasjenige über eine bis in den atomaren Bereich hinein homogene Mischung der Bestandteile und zum anderen ein solches, das mit im Mikrobereich heterogenen Bestandteilen arbeitet.

Das wichtigste Verfahren zur Herstellung von durchgehend homogenen Photokatalysatoren ist das über das sog. Sol-Gel-Verfahren. Wie bereits in der Einleitung erwähnt, ist die Herstellung von dotieren Titandioxid-Schichten nach diesen Verfahren Stand der Technik (siehe P. Sawunyama, a.a.O.). Das Sol-Gel-Verfahren beruht auf dem Prinzip, daß hydrolysierbare Metallkomplexe der interessierenden Ionen in einem geeigneten Lösungsmittel gelöst und innig miteinander vermischt werden. Durch Hydrolyse baut sich langsam eine Metall-Sauerstoff-Metall-(oder Nichtmetall-Element)-Struktur im Lösungsmittel auf, welches dadurch über den Sol- in den Gelzustand überführt wird. Durch anschließendes Trocknen und Sintern werden Lösungsmittel und restliche organische Bestandteile entfernt, und man erhält das reine Mischoxid in exakt den Mengenanteilen, die der ursprünglichen Mischung entsprechen. Der Stand der Technik schlägt hierfür vor, Titan in Form von durch Acetylaceton modifiziertem Titanisopropoxid in Isopropanol einzusetzen und die Hydrolyse mit Hilfe von Essigsäure durchzuführen. In EP 666107 A2 ist ein Herstellungsweg beschrieben, der über Titanylsulfat, Titansulfat, Titanchlorid oder eine organischen Titanverbindung führt. Generell sind hydrolysierbare Titankomplexe wie Titanalkoholate (z.B. Titantetraethylat) oder Titan-β-Diketonate wie Titandichlor-diacetylacetonat geeignet. Das Eisen kann dann in Form eines anorganischen Komplexes, aber auch beispielsweise als Komplex mit einem oder mehreren organischen, über Sauerstoff und/oder Stickstoff gebundenen Liganden eingesetzt werden. Als Beispiel sei Eisen(III)nitrat-Nonahydrat genannt. Für die Verbindung, in der das fünfwertige Metallion zugesetzt wird, gelten ähnliche Überlegungen. So kann beispielsweise Niob in Form der Halogenide, Oxidhalogenide oder Oxidnitrate oder aber der Alkoxide eingesetzt werden. Vanadium existiert in einer Vielfalt von Vanadium(V)-Komplexen mit sauerstoffgebundenen Komplexliganden wie Alkoholaten und dergleichen, teilweise als Mischaddukte mit Oxichloriden oder dergleichen. Auch stickstoffgebundene Ausgangsverbindungen sind denkbar. Als Ausgangsverbindung für den Einbau von Phosphoratomen sind z. B. Phosphorsäure oder Phosphorsäureester (z. B. der Ethylester) möglich.

Die Ausgangsverbindungen werden jeweils gemeinsam oder getrennt in geeigneten Lösungsmitteln vorgelegt und vorsichtig hydrolysiert, beispielsweise durch Zugabe von Essigsäure oder dergleichen. Die Lösungsmittel werden in geeigneter Weise im Hinblick auf die Löslichkeits- und Stabilitätseigenschaften der zu lösenden Substanz gewählt, also beispielsweise Alkohol für Ethanolate und dergleichen.

Nach Hydrolyse wird das Lösungsmittel entfernt und die verbliebene Mischung erhitzt bzw. gesintert, so daß alle organischen Bestandteile entfernt und die geeignete Kristallstruktur erzielt wird. Zur Erzeugung der Anatas-Phase sind z.B. Temperaturen von mindestens 400°C notwendig.

Das voranstehend beschriebene Sol-Gel-Verfahren eignet sich zur Herstellung von Pulvern, die beispielsweise durch Vermahlen des Sinterprodukts erhalten werden können. Insbesondere ist dieses Verfahren aber auch für die Herstellung von Filmen oder Schichten geeignet, die auf einem Substrat aufgebracht werden sollen. Hierfür wird das (noch relativ dünnflüssige, geringer kondensierte) Sol oder das (höher- oder hochviskose, einen höheren bzw. hohen Kondensationsgrad aufweisende) Gel auf das Substrat aufgebracht, beispielsweise durch Tauchbeschichtung, Sprühbeschichtung, Fluten von Gefäßen oder Schleuderauftrag ("spin coating"), und die erzielte Schicht wird sodann wie beschrieben getrocknet und gesintert. Derartig hergestellte Schichten zeichnen sich durch eine ausgezeichnete Haftfestigkeit aus. Sie sind beispielsweise für die Herstellung von Solaranlagen gut geeignet.

Alternative Herstellverfahren sind beispielsweise die folgenden: Die Einzelelemente können in Form von pulverförmigen Oxiden vermischt und gesintert werden, wodurch TiO₂-Fe₂O₃-M₂O₅-Systeme erhalten werden, die allerdings auf molekularer Ebene nicht ganz homogen sind.

Statt dessen können die einzelnen Elemente auch in fester Form als Komplexe mit organischen, beispielsweise sauerstoffgebundenen Liganden (z.B. als Carboxylate oder Alkoholate) in Pulverform vermischt werden. Die Bildung des Mischoxids erfolgt sodann durch thermische Zersetzung.

In wässriger Lösung lassen sich die Hydroxyde des Titans, des Eisens, des Niobs und des Vanadiums relativ leicht in Hydroxo- und Oxokomplexe überführen. Löst man daher solche Ionen gemeinsam in wässriger Lösung und fällt das Oxidgemisch durch Veränderung des pH's, beispielsweise durch Zugabe einer Base, so lassen sich die Oxidhydrate abfiltrieren, waschen und zu den reinen Oxiden trocknen und sintern.

Die mit Hilfe der zuletzt genannten drei Verfahren erhaltenen Titandioxid-Photokatalysatoren lassen sich fein pulverisieren. Die Pulver können entweder als solche eingesetzt werden, sie können aber auch mit speziellen Bindern zu einer Paste verarbeitet werden, die sodann auf ein Substrat (beispielsweise Glas) aufgetragen und dort fixiert wird.

Der erfindungsgemäße Photokatalysator kann selbstverständlich nicht nur in Pulver- oder Schichtform sondern in jeder geeigneten Form eingesetzt werden. Besonders bevorzugt wird er in einer Gestalt mit besonders hoher spezifischer Oberfläche verwendet. Hierfür bieten sich z.B. Fasern, Kugeln, Granulat oder Gewebe an. Fasern und Gewebe werden dabei bevorzugt dadurch gebildet, daß ein wie vorstehend beschriebenes Sol bzw. Gel auf geeigneten Fasern oder auf einem geeigenten Gewebe (z.B. aus Glasfasern) aufgebracht und wie beschrieben getrocknet und gesintert wird. Auch die Kugeln können durch Aufbringen des Photokatalysators auf einem geeigneten Substrat erzeugt werden. Als Schicht kann der Photokatalysator auf einem planaren oder gekrümmten Substrat aufgebracht sein, je nach Bedarf. Als Substrate eignen sich z.B. Glas oder andere silicatische Materialien, aber auch Metalle oder organische Polymere, soweit die für das Sintern des Katalysators erforderliche Temperatur diese nicht unbrauchbar macht.

Alle erfindungsgemäßen Photokatalysatoren eigenen sich z.B. zum photokatalytischen Abbau von organischen Schadstoffen im Wasser, z.B. von chlorierten organischen Verbindungen oder anderen Substanzen, die einem biologischen Abbau nicht oder nur schwer zugänglich sind. Zu reinigende Wässer können beispielsweise Abwässer, besonders aus der Industrie, Grundwasser oder Sickerwasser sein. Man kann das Wasser beispielsweise über beschichtete Glasplatten fließen lassen oder in einem beschichteten Reaktor behandeln. Als Lichtquelle kann die Sonne dienen; ggf. ist der Einsatz von Lampen hilfreich.

Überraschenderweise hat es sich herausgestellt, daß die erfindungsgemäßen Titandioxid-Photokatalysatoren im Vergleich zu solchen Katalysatoren, die zwar Eisen, aber kein Element in der Oxidationsstufe +5 enthalten, nicht nur eine deutlich verringerte Photokorrosion aufweisen, sondern außerdem höhere photokatalytische Abbauraten zeigen. Dies läßt sich beispielweise mit den Modellsubstanzen Dichloressigsäure und Alizarinrot S nachweisen. Dies dürfte darauf beruhen, daß die erfindungsgemäßen Photokatalysatoren eine verbesserte Kristallinität aufweisen.

### Beispiel 1: Herstellung eines Beschichtungssols mit 5 Mol% Eisen und 5 Mol% Niob, bezogen auf Titan.

0,404g (1,0 mmol) Eisen(III)nitrat-Nonahydrat werden in 17,5 ml Ethanol gelöst. Dazu werden 0,25 ml (1,0 mmol) Niobethoxid und 2 ml (26,7 mmol) Propionsäure hinzugefügt und nach Zugabe von 4 ml (19,0 mmol) Titantetraethylat 15 Minuten lang gerührt. Anschließend wird durch Zugabe von 1,14 ml (0,02 mol) Essigsäure und 1 ml (0,055 mol) Wasser in 3 ml Ethanol 30 Minuten lang hydrolysiert.

### Beispiel 2: Beschichtung eines Substrates

Ein Objektträger aus Borosilikat-Glas wurde mit dem Sol des Beispiels 1 tauchbeschichtet, und zwar mit einer Ziehgeschwindigkeit von 13 cm/min bei Reinraumatmosphäre. Die beschichtete Glasplatte wurde im Ofen bei Aufheizraten von 2 bis 10 K/min bis 500°C erhitzt und danach zwei Stunden lang bei 500°C gesintert.

### Beispiel 3: Photokatalytischer Abbau von Dichloressigsäure

Drei Glasplatten mit insgesamt 90 cm² Oberfläche wurden dreimal hintereinander gemäß Beispiel 2 tauchbeschichtet. Die drei Platten wurden in einem Modell-Laborreaktor (Volumen 500 cm³) für den photokatalytischen Abbau von Dichloressigsäure unter dem Licht einer Xenon-Lampe eingesetzt.

Drei weitere Glasplatten wurden analog Beispiel 2 mit einem Sol tauchbeschichtet, das bis auf das Fehlen von Niob in seiner Zusammensetzung dem des Beispiels 1 identisch war.

Es wurde gefunden, daß die Abbaurate der Schicht aus dem Sol des Beispiels 1 um den Faktor 2 höher war als beim niobfreien Vergleichsversuch. Gleichzeitig wurde gefunden, daß die Photokorrosion von Eisen im Sol gemäß Beispiel 1 um den Faktor 2, bezogen auf die niobfreie Vergleichszusammensetzung, erniedrigt war.

### Beispiel 4:

Beispiel 1 wurde mehrmals mit der Änderung wiederholt, daß Eisen(III)nitrat-Nonahydrat und das Niobethoxid jeweils in Mengen in Bereichen zwischen 0.05 mmol (= 0.25 % Fe und Nb, bezogen auf Titan) und 3.0 mmol (= 15 % Fe und Nb, bezogen auf Titan) eingesetzt wurden. Alle so hergestellten Sole zeigten günstige Werte bezüglich der Reduktion der Photokorrosion. Diese Werte verschlechterten sich, wenn das Niob im Sol in einem wesentlich geringeren molaren Anteil als das Eisen vorhanden war.

## Patentansprüche

**1.** Mit Fe³⁺-Ionen dotierter Titandioxid-Photokatalysator, gekennzeichnet durch einen zu den Fe³⁺-Ionen äquimolaren oder annähernd äquimolaren Gehalt an fünfwertigen Ionen.

**2.** Mit Fe³⁺-Ionen dotierter Titandioxid-Photokatalysator nach Anspruch 1, worin die fünfwertigen Ionen ausgewählt sind unter Niob-, Vanadium-, oder Phosphorionen oder einer Mischung hieraus.

**3.** Mit Fe³⁺-Ionen dotierter Titandioxid-Photokatalysator nach Anspruch 1 oder 2, worin das Titandioxid in der Anatas-Kristallstruktur vorliegt.

**4.** Mit Fe³⁺-Ionen dotierter Titandioxid-Photokatalysator nach einem der voranstehenden Ansprüche, der in Form einer Schicht oder in Form eines feinen Pulvers vorliegt.

**4.** Mit Fe³⁺-Ionen dotierter Titandioxid-Photokatalysator nach einem der voranstehenden Ansprüche, worin die Fe³⁺-Ionen in einer Menge von 0,5 bis 10 Mol-%, insbesondere von 3-6 Mol-%, bezogen auf das Titandioxid, vorhanden sind.

**5.** Verfahren zum Herstellen eines mit Fe³⁺-Ionen und fünfwertigen Ionen in äquimolaren oder annähernd äquimolaren Mengen dotierten Titandioxid-Photokatalysators, dadurch gekennzeichnet, daß das Titan und die fünfwertigen Ionen in Form hydrolysierbarer Komplexe, vorzugsweise mit zumindest einem organischen, über Sauerstoff gebundenen Liganden, und das Eisen in Form eines in einem wäßrigen oder organischen Solvens löslichen Eisen(III)-Salzes in einem wäßrigen oder polaren organischen Solvens gelöst werden, die Mischung anschließend hydrolysiert wird, und das gebildete Sol oder Gel getrocknet und anschließend bei ≥ 400°C gesintert wird.

**6.** Verfahren zum Herstellen eines mit Fe³⁺-Ionen und fünfwertigen Ionen in äquimolaren oder annähernd äquimolaren Mengen dotierten Titandioxid-Photokatalysators, dadurch gekennzeichnet, daß das Titan, das Eisen(III) und das fünfwertige Element als Oxid oder als durch Pyrolyse in ein Oxid überführbare Substanz in Pulverform innig miteinander vermischt, anschließend ggf. thermolysiert, sodann bei ≥ 400°C gesintert und dann gegebenenfalls vermahlen werden.

**7.** Verfahren zum Herstellen eines mit Fe³⁺-Ionen und fünfwertigen Ionen in äquimolaren oder annähernd äquimolaren Mengen dotierten Titandioxid-Photokatalysators, dadurch gekennzeichnet, daß lösliche Salze des Titans, des Eisen(III) und des fünfwertigen Elementes in einem geeigneten Lösungsmittel gelöst werden und das Gemisch der genannten Elemente durch Zugabe eines Fällmittels in Oxidform ausgefällt, abfiltriert, gewaschen und anschließend getrocknet und sodann bei ≥ 400°C gesintert wird.

**8.** Verfahren zum Herstellen einer mit Fe³⁺-Ionen und fünfwertigen Ionen in äquimolaren oder annähernd äquimolaren Mengen dotierten Titandioxid-Photokatalysator-Schicht auf einem Substrat, dadurch gekennzeichnet, daß das dotierte Titandioxid in Pulverform mit einem Bindemittel vermischt auf dem Substrat aufgebracht und anschließend getrocknet wird oder daß das dotierte Titandioxid in Gelform oder als Sol auf das genannte Substrat aufgebracht, anschließend getrocknet und bei ≥ 400°C gesintert wird.

**9.** Verwendung eines mit Fe³⁺-Ionen dotierten Photokatalyators nach einem der Ansprüche 1 bis 4 zum Reinigen von wäßrigen Flüssigkeiten.

**10.** Verwendung nach Anspruch 9, dadurch gekennzeichnet, daß es sich bei den Flüssigkeiten um Abwasser, Grundwasser oder Sickerwasser handelt und/oder daß die Flüssigkeit über ein mit dem Photokatalysator beschichtetes Substrat geleitet oder in einem mit dem Photokatalysator beschichteten Gefäß behandelt wird.
